# EUROPEAN PATENT APPLICATION

(11) **EP 4 848 540 A1**
(43) Date of publication of application: **02.12.2026**
(21) Application number: 26180741.6
(22) Date of filing: 22.05.2026
(51) Int. Cl.: H02K 5/20, H02K 9/19, H02K 7/00, H02K 7/116, H02K 11/33

(54) **INTEGRATED HEAT EXCHANGER FOR ELECTRIC MOTOR AND TRANSMISSION**

(30) Priority: 29.05.2025 US 202519222917
(71) Applicant: Lockheed Martin Corporation, Bethesda, Maryland 20817 (US)
(72) Inventor: Wittke, Kevin M., Milford, Connecticut 06460 (US); Visinski, Nicholas C., Milford, Connecticut 06460 (US); Palmer, Griffin John Thomas, Englewood, Colorado 80111 (US)
(74) Representative: Schmitt-Nilson Schraud Waibel Wohlfrom Patentanwälte Partnerschaft mbB

(57) **Abstract**

An electric motor drive system for use in driving operation of one or more aircraft and/or vehicle components includes a motor housing and a stator. The motor housing defines an oil passage and a water passage. The water passage is separated from the oil passage and is disposed adjacent to the oil passage along a length of the oil passage so as to enable heat transfer between the oil passage and the water passage. The stator is disposed within the motor housing adjacent to at least one of the oil passage or the water passage.

## Description

The present disclosure relates generally to the field of cooling systems for electric motor drive systems.

Electric motor drive systems (e.g., electric motor-driven transmission systems, etc.) may be used to power various equipment, including for electric propulsion systems for aircraft (e.g., helicopters, etc.). Such electric motor-drive systems may include multiple types of cooling systems including a water-based cooling system and an oil-based cooling system. The system may further include external heat exchangers.

One aspect of the present disclosure relates to an electric motor drive system including a motor housing and a stator. The motor housing defines an oil passage and a water passage. The water passage is separated from the oil passage and is disposed adjacent to the oil passage along a length of the oil passage so as to enable heat transfer between the oil passage and the water passage. The stator is disposed within the motor housing adjacent to at least one of the oil passage or the water passage.

Another aspect of the present disclosure relates to an electric motor housing including a housing body. The housing body defines a bore that is sized to receive a stator therein. The housing body further defines an oil passage and a water passage. The oil passage extends along a length of the bore. The water passage is separated from the oil passage and is disposed adjacent to the oil passage along a length of the oil passage so as to enable heat transfer between the oil passage and the water passage.

Yet another aspect of the present disclosure relates to a method of manufacturing an electric motor drive system. The method includes forming a housing defining a bore that is sized to receive a stator therein; forming an oil passage into the housing that extends along a length of the bore; and forming a water passage into the housing that is separate from the oil passage and that is disposed adjacent to the oil passage along a length of the oil passage so as to enable heat transfer between the oil passage and the water passage.

This summary is illustrative only and should not be regarded as limiting.

### BRIEF DESCRIPTION OF THE DRAWINGS

The disclosure will become more fully understood from the following detailed description, taken in conjunction with the accompanying figures, wherein like reference numerals refer to like elements, in which:
FIG. 1 is a side view of a rotary wing aircraft, according to an embodiment.
FIG. 2 is a block diagram of an electric motor drive system that may be used to power at least a portion of the rotary wing aircraft of FIG. 1.
FIG. 3 is a side cross-sectional view of an electric motor assembly inclusive of a motor housing defining a water-oil heat exchanger that may be used in the electric motor drive system of FIG. 1, according to an embodiment.
FIG. 4A is a side cross-sectional view of a motor housing of FIG. 3.
FIG. 4B is an expanded cross-sectional view of water and oil passages formed into the motor housing of FIG. 4A.
FIG. 5 is a flow diagram of a method of making the electric motor drive system of FIG. 1.

In the following detailed description, reference is made to the accompanying drawings, which form a part hereof. In the drawings, similar symbols typically identify similar components, unless context dictates otherwise. The illustrative embodiments described in the detailed description, drawings, and claims are not meant to be limiting. Other embodiments may be utilized, and other changes may be made, without departing from the scope of the claims. It will be readily understood that the aspects of the present disclosure, as generally described herein, and illustrated in the figures, can be arranged, substituted, combined, and designed in a wide variety of different configurations, all of which are explicitly contemplated and made part of this disclosure.

Electric motor drive systems are used in a variety of applications to drive rotation of various components. For example, electric motor drive systems are used in ground vehicles to power operation of wheels in hybrid and fully electric vehicles, hydraulic pumps, and/or other driven components. The electric motor drive systems of the present application may also be used in aviation applications, such as to drive operation of rotor blades for a rotorcraft, particularly in the context of urban air mobility and electric vertical takeoff and landing aircraft. Such systems may include an electric motor assembly and a transmission (e.g., a gearbox, etc.) that is powered by the electric motor assembly to drive operation of one or more driven components.

The electric motor drive system may also include a cooling system used to dissipate heat from heat transfer fluids to the surrounding environment. The cooling system may include oil to cool and lubricate the transmission and a water-based coolant to cool the electric motor assembly. In certain implementations, the cooling systems includes at least one external air-water heat exchanger and at least one oil-air and/or oil-water heat exchanger to facilitate heat transfer from different coolant types to the environment surrounding the electric motor drive system.

Embodiments of the present disclosure relate to an electric motor drive system that includes an oil-water heat exchanger that is configured to transfer heat from both the transmission fluid (e.g., transmission oil, etc.) and the electric motor stator to the water-based coolant. The oil-water heat exchanger is integrated into a motor housing of the electric motor assembly. The water-oil heat exchanger facilitates heat transfer between the oil and the water without requiring an external oil-air or oil-water heat exchanger that is separate from the electric motor and the transmission. The combined heat dissipation from the motor and transmission is rejected to the environment by a water-air heat exchanger that is fluidly coupled to the electric motor assembly, and may be disposed remote from both the electric motor assembly and the transmission.

Among other benefits, transferring heat from both the electric motor assembly and the transmission to the water-based coolant passing through the motor housing can increase system operating efficiency, due to both the higher heat capacity and heat transfer coefficient of the water-based coolant compared to the transmission oil. The water-based coolant also has a lower viscosity than oil, which can reduce pressure drop during operation at similar flow rates.

Additionally, incorporating the oil-water heat exchanger into the motor housing can reduce the overall weight of the system by eliminating the need for a separate oil-air and/or oil-water heat exchanger(s). Exemplary embodiments can also eliminate the need-and the weight associated with the use of-oil lines and/or fittings (e.g., check valves, oil cooler bypass valve(s), etc.) external to the electric motor drive system, as well as the weight of any additional oil needed to support an external oil-air and/or oil-water heat exchanger. Moreover, because no external oil lines are used, the system also reduces the risk of leakage of transmission oil during operation. The reduced leak sources for transmission oil and/or gearbox oil can be particularly important in aircraft applications due to the added safety margin during flight.

In some embodiments, the oil-water heat exchanger is defined by the motor housing and is formed with the motor housing as a monolithic body from a single piece of material. In particular, the oil-water heat exchanger and motor housing can be formed integrally. For example, the motor housing may be formed using additive manufacturing.

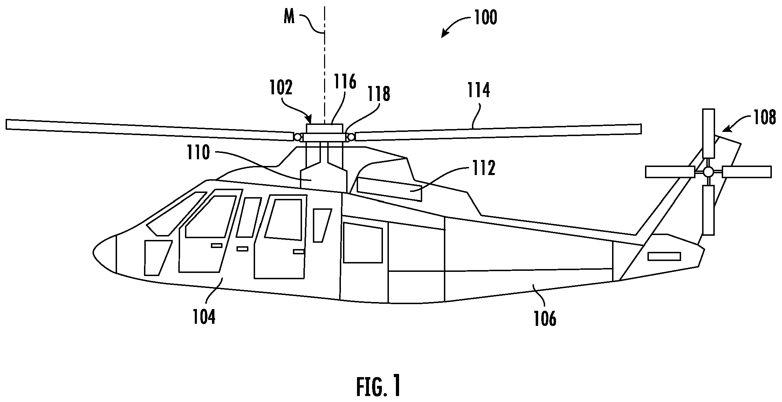

FIG. 1 depicts a rotary wing aircraft 100 (e.g., an airframe, an aircraft, a rotorcraft, etc.) having a main rotor assembly 102, according to an embodiment. The aircraft 100 includes an airframe 104 having an extending tail 106 which mounts an anti-torque system, such as a tail rotor assembly 108. The main rotor assembly 102 is driven about a rotor axis of rotation M through a transmission 110 by one or more motors 112. The main rotor assembly 102 includes a plurality of rotor blades 114 mounted to a rotor hub 116. In some embodiments, the main rotor assembly 102 also includes and a swashplate 118 that is used to affect a state or orientation of the rotor blades 114. The tail rotor assembly 108 is driven about a second motor axis that is substantially perpendicular to the motor axis M that is driven through a transmission by the motor 112 or a second motor that is separate from the motor 112. The aircraft 100 may also include other driven components (e.g., a hydraulic pump, etc.) that may be driven by the transmission and the motor 112.

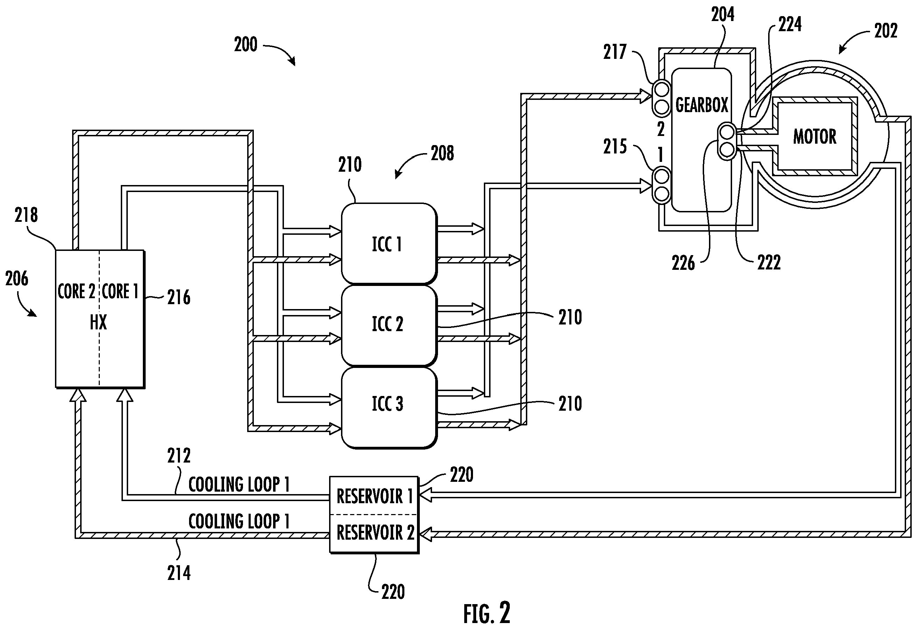

FIG. 2 depicts an example electric motor drive system 200 (e.g., an electric motor-driven transmission system, etc.) that may be used to drive operation of at least one of the driven components of the aircraft 100 in FIG. 1 (e.g., the main rotor assembly 102, the tail rotor assembly 108, etc.). In other embodiments, the electric motor drive system 200 may be used in another application, such as to power a drivetrain or portion thereof for an on or off-highway hybrid vehicle or fully electric vehicle (e.g., a bus, a truck, a car, etc.), a marine vehicle, or another application.

The electric motor drive system 200 includes an electric motor assembly 202, a transmission 204 (e.g., a gearbox, etc.), a water-air heat exchanger 206, and at least one power electronics circuit 208. It should be appreciated that the number of each of the components used in the electric motor drive system 200 (e.g., the number of power electronics circuits, the number of cores for the external heat exchanger, etc.) may be different in other embodiments. In other embodiments, the electric motor drive system 200 may include additional, fewer, and/or different components.

The electric motor assembly 202 and the transmission 204 are together configured to drive movement of one or more components of the electric motor drive system 200. The at least one power electronics circuit 208 is configured to control operation of the electric motor assembly 202, for example, based on aircraft operating conditions, and/or operator commands. In the embodiment of FIG. 2, the at least one power electronics circuit 208 includes three separate integrated circuits 210. In other embodiments, the number of integrated circuits 210 may be different.

The electric motor assembly 202, the transmission 204, and the water-air heat exchanger 206 together form a cooling system for the electric motor drive system 200. In the embodiment of FIG. 2, the cooling system includes multiple different cooling fluids, including a water-based coolant and a transmission oil. The water-based coolant is configured to facilitate cooling of each of the at least one power electronics circuits 208 and the electric motor assembly 202. The transmission oil is configured to facilitate cooling and lubrication of the transmission 204. The water-based coolant may include an antifreeze-water mixture including one of ethylene glycol or propylene glycol. In other embodiments, such as in applications in tropical or sub-tropical climates, the water-based coolant may include only water. The transmission oil (e.g., gearbox oil, etc.) may include a mineral base oil or a synthetic base oil, depending on application requirements.

In some embodiments, the cooling system includes a plurality of cooling loops (e.g., cooling circuits, etc.), shown as a first cooling loop 212 and a second cooling loop 214. Including more than one cooling loop can increase system redundancy, which is particularly important in aircraft applications in which one of the first cooling loop 212 or the second cooling loop 214 can ensure continued cooling of the electric motor drive system 200 if the other cooling loop becomes damaged or otherwise ceases operation.

In the embodiment of FIG. 2, both the first cooling loop 212 and the second cooling loop 214 are water-based cooling loops that are configured to receive and transport the water-based coolant between the at least one power electronics circuit 208 (e.g., each of the plurality of integrated circuits 210, etc.), the electric motor assembly 202, and the water-air heat exchanger 206. In the embodiment of FIG. 2, the first cooling loop 212 and the second cooling loop 214 are arranged in parallel with one another through so that each of the first cooling loop 212 and the second cooling loop 214 provide cooling to each of the integrated circuits, the transmission, and the electric motor assembly. In other embodiments, the number and/or arrangement of cooling loops may be different.

The water-air heat exchanger 206 is configured to transfer heat from the first cooling loop 212 and the second cooling loop 214 to an environment (e.g., the air) surrounding the electric motor drive system 200. In the embodiment of FIG. 2, the water-air heat exchanger 206 includes a plurality of heat exchanger cores, shown as a first core 216 and a second core 218 that are configured to facilitate heat transfer between (i) a respective one of the first cooling loop 212 and the second cooling loop 214, and (ii) the air flowing through the water-air heat exchanger 206. At least one of the first core 216 and the second core 218 may include a plate heat exchanger core, a tube and shell heat exchanger core, a finned tube heat exchanger core, or another type of heat exchanger core arrangement. In other embodiments, the water-air heat exchanger 206 may include additional or fewer cores.

In some embodiments, the cooling system (e.g., the first cooling loop 212 and/or the second cooling loop 214) includes a coolant reservoir 220 that is configured to hold a volume of excess coolant for the cooling system. The cooling system also includes a plurality of coolant pumps, shown as a first coolant pump 215 and a second coolant pump 217, that are configured to pump the water-based coolant through a respective one of the first cooling loop 212 and the second cooling loop 214.

In the embodiment of FIG. 2, the cooling system is devoid of (i.e., lacks, has an absence of) any oil-air and oil-water heat exchangers disposed remote from the electric motor assembly 202. In such an arrangement, the water-air heat exchanger 206 rejects heat for the entire electric motor drive system 200.

Referring still to FIG. 2, the transmission 204 (e.g., the gearbox, etc.) is configured to transmit power from the electric motor assembly 202 to one or more driven components, such as a rotor assembly, a drivetrain, an axle, a wheel, etc. The transmission 204 includes cooling passages (e.g., oil feed lines, gearbox cooling passage(s), etc.) that are configured to move oil through the transmission 204 to lubricate and cool any moving components of the transmission 204. In the embodiment of FIG. 2, the transmission 204 includes an oil inlet 222 and an oil outlet 224 that are both fluidly coupled to an oil passage of the electric motor assembly 202 (e.g., an oil passage of the motor housing, etc.), as will be further described. The transmission 204 also includes at least one oil pump 226 that is configured to pump transmission oil through an oil loop (e.g., a gearbox oil passage, etc.) defined by the transmission 204 and the electric motor assembly 202.

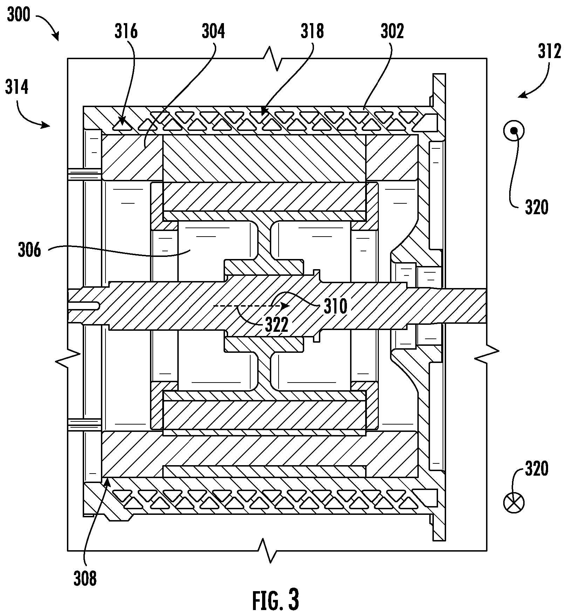

The electric motor assembly 202 is configured to convert electrical energy to mechanical energy to power rotation of the transmission 204 (e.g., a driveshaft, etc.). FIG. 3 depicts an example electric motor assembly 300 that may be used in the electric motor drive system 200 of FIG. 2. The electric motor assembly 300 includes a motor housing 302 (e.g., a housing body, etc.), a stator 304, and a rotor 306. In other embodiments, the electric motor assembly 300 may include additional, fewer, and/or different components.

The motor housing 302 is configured to house the various components of the electric motor assembly 300. The motor housing 302 defines a bore 308 (e.g., a hollow interior cavity, etc.) that is sized to receive the stator 304 therein. In the embodiment of FIG. 2, the bore 308 is a cylindrically shaped bore that extends along a longitudinal direction 310 between a first end 312 and a second end 314 of the motor housing 302.

The motor housing 302 is also configured to cool both the electric motor assembly 300 and the transmission (not shown). In the embodiment of FIG. 3, the motor housing 302 further defines cooling passages for both the water-based coolant and the transmission oil. The motor housing 302 defines an oil passage 318 (e.g., a first coolant passage, etc.) extending along a length of the bore 308. In some embodiments, the oil passage 318 extends at least partially along the longitudinal direction 310 and across a length of the bore 308 that is approximately equal to the length of the stator 304 in the longitudinal direction 310. In some embodiments, the oil passage 318 extends across substantially the entire length of the bore 308 in the longitudinal direction 310.

Referring still to FIG. 3, the motor housing 302 also defines a water passage 316 (e.g., a second coolant passage, etc.) that is separated from the oil passage 318 along a length of the oil passage 318 so as to enable heat transfer between the oil passage 318 and the water passage 316. In the embodiment of FIG. 3, the water passage 316 extends substantially parallel to the oil passage 318 along substantially an entire length of at least one of the oil passage 318 or the water passage 316 (e.g., the oil passage 318 and/or the water passage 316). Such an arrangement increases the effective area for heat transfer between the oil passage 318 and the water passage 316 along the motor housing 302. In the embodiment of FIG. 3, the water passage 316 is disposed radially between the oil passage 318 and the bore 308, and between the oil passage 318 and the stator 304 when the stator 304 is fully installed into the motor housing 302, which reduces heat transfer resistance between the stator 304 and the water passage 316 during operation.

In the embodiment of FIG. 3, at least one of oil passage 318 or the water passage 316 (e.g., the oil passage 318 and/or the water passage 316) include a helically shaped passage that extends along both a circumferential direction 320 relative to a longitudinal axis 322 of the housing bore 308 and the longitudinal direction 310 (e.g., substantially parallel to the longitudinal axis 322). Such an arrangement can increase the effective area available for heat transfer for each of the oil passage 318 and the water passage 316 along the length of the motor housing 302.

In some embodiments, the oil passage 318 and the water passage 316 are both helically shaped passages that are interdigitated with one another in substantially alternating arrangement along the longitudinal direction 310, which increases the effective area for heat transfer between the oil passage 318 and the water passage 316 along the length of the motor housing 302. In other embodiments, the overall shape of the oil passage 318 and/or the water passage 316 may be different. For example, the oil passage 318 and/or the water passage 316 may include at least one substantially linear passage, or a plurality of parallel linear passages extending substantially parallel to the longitudinal direction 310.

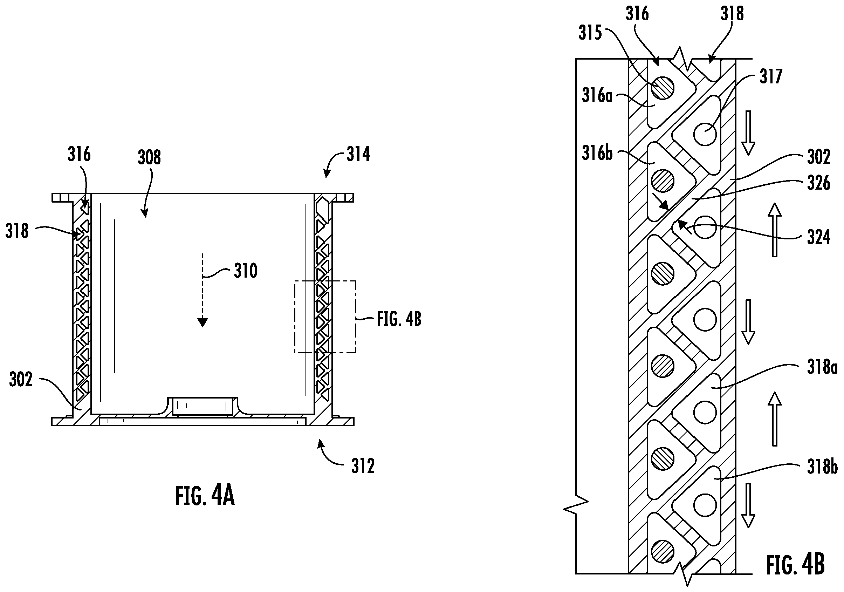

The cross-sectional shape and/or number of the oil passage 318 and the water passage 316 may also be different in various embodiments. For example, referring to FIGS. 4A-4B, the water passage 316 and/or the oil passage 318 may be defined by passages having a triangular cross-sectional shape when viewed normal to a flow direction through the water passage 316 and/or the oil passage 318. In such embodiments, each helical loop of the oil passage 318 may be at least partially nestably engaged between two adjacent helical loops of the water passage 316. In other embodiments, a cross-sectional shape of the oil passage 318 and/or the water passage 316 may be different. For example, the oil passage 318 and/or the water passage 316 may have a circular cross-sectional shape, an elliptical cross-sectional shape, or another cross-sectional shape.

In the embodiment of FIGS. 4A-4B, the water passage 316 and the oil passage 318 have a similar size and cross-sectional shape, which can enable greater flow rates for the water-based coolant, and higher heat transfer rates, compared to the oil passing through the motor housing 302. Such an arrangement can provide sufficient heat removal to enable sustained operation of both the electric motor assembly 300 and the transmission without overheating. Such an arrangement can also enable operation of the electric motor assembly and the transmission to continue if one of the cooling loops ceases operation.

In some embodiments, the water passage 316 and the oil passage 318 are arranged such that a thickness 324 of a housing wall 326 between the oil passage 318 and the water passage 316 is approximately uniform across the entire length of the motor housing 302, which can reduce heat transfer resistance between the water passage 316 and the oil passage 318.

The water passage 316 is configured to transfer coolant 315 across the motor housing 302 to cool the motor housing 302. In the embodiment of FIGS. 4A-4B, the water passage 316 is one of a plurality of water passages, shown as a first water passage 316a and a second water passage 316b. The first water passage 316a and the second water passage 316b may be interdigitated with one another and may extend substantially parallel to one another. In the embodiment of FIGS. 4A-4B, the first water passage 316a and the second water passage 316b are each configured to fluidly couple the motor housing 302 to a respective one of the cooling loops (e.g., the first cooling loop 212 and the second cooling loop 214 of FIG. 2).

The oil passage 318 is configured to transfer oil 317 from the transmission (e.g., an oil outlet of the transmission) across the motor housing 302 to cool the oil and the return the oil back to the transmission (e.g., through an oil inlet of the transmission). In the embodiment of FIG. 4B, the oil passage 318 includes a first portion 318a that extends from an oil inlet proximate to the first end 312 of the motor housing 302 toward a second end 314 of the motor housing 302. A second portion 318b of the oil passage 318 extends from the first portion 318a of the motor housing 302 (e.g., proximate to the second end 314) to an oil outlet proximate to the first end of the motor housing 302, where it returns to an oil inlet of the transmission. In the embodiment of FIG. 4B, the first portion 318a and the second portion 318b of the oil passage 318 are interdigitated with one another along the longitudinal direction 310 so that adjacent helical turns of the oil passage 318 direct oil in opposite directions.

In the embodiment of FIG. 4B (and as shown with respect to the electric motor drive system 200 in FIG. 2), both the motor housing 302 and the transmission are devoid of external oil ports for transferring oil to an external oil-air or oil-water heat exchanger that is separate from the motor housing 302.

In some embodiments, the motor housing 302 is formed as a monolithic body from a single piece of material via additive manufacturing (e.g., via one or more additive manufacturing processes). For example, the motor housing 302 may be formed from aluminum silicon magnesium alloy via a laser powder-based fusion operation (e.g., selective laser melting, direct metal laser sintering, etc.) or another laser-based sintering approach. In some embodiments, the motor housing 302 is constructed from other metals, metal alloys, composite materials or combinations thereof. In other embodiments, another form of additive manufacturing may be used to produce the motor housing 302 (e.g., a binder jetting method, etc.). Among other benefits, the use of additive manufacturing to form the motor housing 302 enables the use of more complex passage geometries across the motor housing 302.

Additive manufacturing techniques can also enable the formation of other more intricate features along the water passage 316 and/or the oil passage 318. For example, additive manufacturing techniques can be used to incorporate fins along the length of at least one passage, which can reduce heat transfer resistance between the cooling fluid streams and the motor housing 302. In some embodiments, additive manufacturing techniques can be used to incorporate other flow features, such as turbulators (e.g., protrusions, etc.) to cause turbulence of fluid for reducing the resistance to convective heat transfer along the passage(s).

Returning to FIG. 3, the stator 304 is disposed within the motor housing 302 adjacent to at least one of the oil passage 318 and the water passage 316. In the embodiment of FIG. 3, the stator 304 is press-fit into the motor housing 302, which reduces heat transfer resistance therebetween. The rotor 306 is disposed within the stator 304 and rotates in response to a magnetic field between the rotor 306 and the stator 304. The rotor 306 is coupled to an output shaft and rotates the output shaft upon activation of the electric motor assembly 300 to drive operation of the transmission.

Notwithstanding the embodiments described above in reference to FIGS. 1-3 and FIGS. 4A-4B, various modifications and inclusions to those embodiments are contemplated and considered within the scope of the present disclosure.

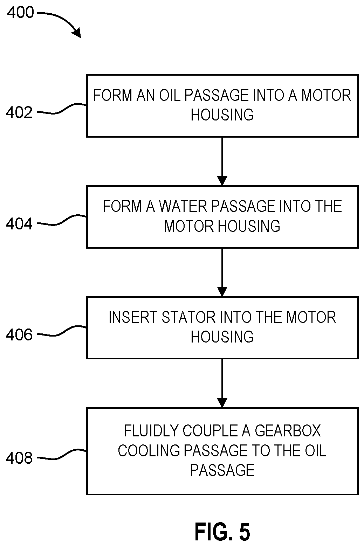

Referring to FIG. 5, a method 400 of making an electric drive system is shown, according to an embodiment. The method 400 may be used to manufacture any of the electric drive systems described with reference to FIGS. 2-3 and FIGS. 4A-4B.

The method 400 includes forming a motor housing (e.g., a housing body, etc.) for an electric motor assembly. At operation 402, an oil passage is formed into the motor housing. In some embodiments, operation 402 includes forming the motor housing and oil passage using an additive manufacturing process. In some embodiments, operation 402 also includes forming a motor housing defining a bore that is sized to receive a stator therein. Operation 402 may include forming a helically shaped oil passage having a triangular shaped cross-section normal to a flow direction therethrough.

At operation 404, a water passage that is separate from the oil passage is formed into the motor housing. Operation 404 may include forming the water passage adjacent to the oil passage along a length of the oil passage so as to enable heat transfer between the oil passage and the water passage. In some embodiments, operation 404 includes forming the water passage in a location that is disposed radially between the oil passage and the housing bore. In some embodiments, operation 404 includes forming the water passage using the additive manufacturing process described in operation 402. Operation 404 may include forming the water passage in a helical shape so that the water passage is interdigitated (e.g., is arranged in alternating arrangement) with the oil passage along the length of the motor housing.

At operation 406, a stator is inserted into the motor housing. In some embodiments, operation 406 includes pressing the stator into the bore of the motor housing and into press-fit or interference fit engagement with the motor housing so as to reduce the heat transfer resistance between the stator and the motor housing.

At operation 408, a transmission is coupled to the motor housing. In some embodiments, operation 408 includes fluidly coupling a gearbox cooling passage of the gearbox to the oil passage that extends through the motor housing so that oil leaving the transmission is cooled within the motor housing during operation and returned to the transmission at reduced temperature.

As utilized herein with respect to numerical ranges, the terms "approximately," "about," "substantially," and similar terms generally mean +/- 10% of the disclosed values, unless specified otherwise. As utilized herein with respect to structural features (e.g., to describe shape, size, orientation, direction, relative position, etc.), the terms "approximately," "about," "substantially," and similar terms are meant to cover minor variations in structure that may result from, for example, the manufacturing or assembly process and are intended to have a broad meaning in harmony with the common and accepted usage by those of ordinary skill in the art to which the subject matter of this disclosure pertains. Accordingly, these terms should be interpreted as indicating that insubstantial or inconsequential modifications or alterations of the subject matter described and claimed are considered to be within the scope of the disclosure as recited in the appended claims.

The term "coupled" and variations thereof, as used herein, means the joining of two members directly or indirectly to one another. Such joining may be stationary (e.g., permanent or fixed) or moveable (e.g., removable or releasable). Such coupling may be mechanical, electrical, or fluidic.

References herein to the positions of elements (e.g., "top," "bottom," "above," "below") are merely used to describe the orientation of various elements in the FIGURES. It should be noted that the orientation of various elements may differ according to other exemplary embodiments, and that such variations are intended to be encompassed by the present disclosure.

Although the figures and description may illustrate a specific order of method steps, the order of such steps may differ from what is depicted and described, unless specified differently above. Also, two or more steps may be performed concurrently or with partial concurrence, unless specified differently above.

It is important to note that any element disclosed in one embodiment may be incorporated or utilized with any other embodiment disclosed herein. The systems and methods described herein may be embodied in other specific forms without departing from the characteristics thereof. The foregoing implementations are illustrative rather than limiting of the described systems and methods. The scope of the systems and methods described herein is thus indicated by the appended claims, rather than the foregoing description, and changes that come within the meaning and range of equivalency of the claims are embraced therein.

## Claims

1. An electric motor drive system (200), comprising:
a motor housing (302) defining:
an oil passage (318); and
a water passage (316) separated from the oil passage and disposed adjacent to the oil passage along a length of the oil passage so as to enable heat transfer between the oil passage and the water passage; and
a stator (304) disposed within the motor housing adjacent to at least one of the oil passage or the water passage.

2. The electric motor drive system of claim 1, further comprising a gearbox (204) coupled to the motor housing, wherein the oil passage is fluidly coupled to the gearbox.

3. The electric motor drive system of claim 2, wherein the gearbox comprises an oil inlet (222) and an oil outlet (224) that are both fluidly coupled to the oil passage.

4. The electric motor drive system of claim 2 or claim 3, wherein the motor housing and the gearbox lack external oil ports for transferring oil to an external heat exchanger.

5. The electric motor drive system of any one of the preceding claims, wherein the electric motor drive system lacks an external oil-air heat exchanger and an external oil-water heat exchanger that is separate from the motor housing.

6. The electric motor drive system of any one of the preceding claims, further comprising a water-air heat exchanger (206) fluidly coupled to the water passage and to at least one power electronics component (208).

7. An electric motor housing, comprising:
a housing body (302) defining a bore (308) that is sized to receive a stator (304) therein, the housing body further defining:
an oil passage (318) extending along a length of the bore; and
a water passage (316) separated from the oil passage and disposed adjacent to the oil passage along a length of the oil passage so as to enable heat transfer between the oil passage and the water passage.

8. The electric motor drive system of any one of claims 1-6 or the electric motor housing of claim 7, wherein the electric motor housing is formed from a single piece of material from an additive manufacturing process.

9. The electric motor drive system of any one of claims 1-6 or the electric motor housing of claim 7 or claim 8, wherein the water passage extends substantially parallel to the oil passage along an entire length of at least one of the oil passage or the water passage.

10. The electric motor drive system of any one of claims 1-6 or the electric motor housing of any one of claims 7-9, wherein at least one of the oil passage or the water passage is a helically shaped passage that extends along both a circumferential direction (320) and a longitudinal direction (310).

11. The electric motor drive system of any one of claims 1-6 or the electric motor housing of any one of claims 7-10, wherein the water passage is disposed radially between (i) the oil passage and (ii) the stator or the bore, wherein optionally the water passage is one of a plurality of water passages (316a, 316b) extending substantially parallel to one another.

12. The electric motor drive system of any one of claims 1-6 or the electric motor housing of any one of claims 7-11, wherein the oil passage includes a first portion (318a) extending from an oil inlet proximate to a first end (312) of the electric motor housing toward a second end (314) of the electric motor housing, and a second portion (318b) extending from the first portion at the second end back to an oil outlet of the electric motor housing at the first end.

13. A method, comprising:
forming a housing body (302) defining a bore (308) that is sized to receive a stator (304) therein;
forming an oil passage (318) into the housing body that extends along a length of the bore; and
forming a water passage (316) into the housing body that is separate from the oil passage and that is disposed adjacent to the oil passage along a length of the oil passage so as to enable heat transfer between the oil passage and the water passage.

14. The method of claim 13, wherein the oil passage and the water passage are formed by additive manufacturing.

15. The method of claim 13 or 14, further comprising:
pressing the stator into the bore of the housing body so as to thermally couple the stator with the water passage; and
fluidly coupling a gearbox cooling passage of a gearbox (204) to the oil passage.
